# EUROPEAN PATENT APPLICATION

(11) **EP 4 851 886 A1**
(43) Date of publication of application: **09.12.2026**
(21) Application number: 26182460.1
(22) Date of filing: 02.06.2026
(51) Int. Cl.: G06Q 10/0631, B64D 45/00, G06Q 50/40, G07C 5/08, G08G 5/21

(54) **SYSTEM AND METHOD OF VISUAL TASK STATUS CONFIRMATION FOR VEHICLE ELECTRONIC CHECKLISTS**

(30) Priority: 03.06.2025 IN 202511053669; 17.07.2025 US 202519272479
(71) Applicant: Honeywell International Inc., Charlotte, NC 28202 (US)
(72) Inventor: GUPTA, Sumit, Charlotte, 28202 (US); HASANABADA, Sindhusree, Charlotte, 28202 (US); KANUGU, Shirisha, Charlotte, 28202 (US)
(74) Representative: Ingrassia, Fisher & Lorenz UK Ltd.

(57) **Abstract**

A method includes receiving data indicating a real-time context of a vehicle including indicators of an actual status of one or more tasks to be performed by a vehicle operator listed on one or more checklists of the vehicle, and monitoring audio on the vehicle. The method includes determining whether the audio includes language that indicates one or more of the tasks on the checklists was performed, and marking a task complete on a digital checklist of the one or more tasks when the audio indicates a task was performed. The method also includes comparing the actual status to an expected status of individual tasks, and displaying a result of the comparing including visual copies of an object used to indicate a status of the task on the vehicle with a first visual copy showing an actual task status and a second visual copy showing an expected task status.

## Description

### CROSS REFERENCE TO RELATED APPLICATION

This application claims priority to India Provisional Patent Application No. 202511053669, filed June 3, 2025, the entire content of which is incorporated by reference herein.

### TECHNICAL FIELD

The subject matter described herein generally relates to vehicle systems, and more particularly, to checklist management for vehicles.

### BACKGROUND

For vehicles such as aircraft, an electronic checklist of tasks to be performed may be provided to pilots during various phases of a mission, whether pre-flight, in-flight, or post-flight. These checklists can often be difficult to manage when a pilot must view information from multiple screens and instrument panels to confirm the status of a task, thereby increasing workload. When the pilot does not use the checklist to indicate which tasks have been completed such as when the pilot is performing a checklist by memory alone, no automatic system exists to track the status of the tasks anyway so that the pilot can be subsequently reminded as to which tasks were completed and which tasks are still uncomplete when such a reminder is desired. Hence, it is desirable to provide a vehicle method and system that automatically indicates whether a task on a checklist was or was not adequately completed even when the pilot does not directly use the checklist, and all at a single location to reduce pilot workload.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one example implementation, a method includes receiving, by at least one processor, data indicating a real-time context of a vehicle including indicators of an actual status of one or more tasks to be performed by a vehicle operator listed on one or more checklists of the vehicle, and monitoring, by at least one processor, audio on the vehicle. The method includes determining, by at least one processor, whether the audio includes language that indicates one or more of the tasks on the checklists was performed, and marking, by at least one processor, a task complete on a digital checklist of the one or more tasks when the audio indicates a task was performed. The method also includes determining, by at least one processor, an expected status of the one or more tasks, comparing, by at least one processor, the actual status to the expected status of individual tasks, and displaying a result of the comparing on an image on a display device on the vehicle including one or more visual copies of an object used to indicate a status of the task on the vehicle with a first visual copy showing an actual task status and a second visual copy showing an expected task status.

In another example implementation, a system includes memory, and processor circuitry forming at least one processor communicatively coupled to the memory and being arranged to operate by receiving data indicating a real-time context of a vehicle including indicators of an actual status of one or more tasks to be performed by a vehicle operator listed on one or more checklists of the vehicle, and monitoring audio on the vehicle, determining whether the audio includes language that indicates one or more of the tasks on the checklists was performed. The processor also is arranged to operate by marking a task complete on a digital checklist of the one or more tasks when the audio indicates a task was performed, determining an expected status of the one or more tasks comprising using checklist data prestored in the memory**,** and comparing the actual status to the expected status of individual tasks. The processor also is arranged to operate by displaying a result of the comparing on an image on a display device on the vehicle including one or more visual copies of an object used to indicate a status of the task on the vehicle with a first visual copy showing an actual task status and a second visual copy showing an expected task status.

In yet another example implementation, at least one non-transitory computer-readable medium includes instructions stored thereon that, when executed by a computing device, cause the computing device to operate by receiving data indicating a real-time context of a vehicle including indicators of an actual status of one or more tasks to be performed by a vehicle operator listed on one or more checklists of the vehicle, monitoring audio on the vehicle, and determining whether the audio includes language that indicates one or more of the tasks on the checklists was performed. The instructions also cause the computing device to operate by marking a task complete on a digital checklist of the one or more tasks when the audio indicates a task was performed, determining an expected status of the one or more tasks**,** comparing the actual status to the expected status of individual tasks, and displaying a result of the comparing on an image on a display device on the vehicle including one or more visual copies of an object used to indicate a status of the task on the vehicle with a first visual copy showing an actual task status and a second visual copy showing an expected task status.

Furthermore, other desirable features and characteristics of the system and method disclosed herein will become apparent from the subsequent detailed description and the appended claims, taken in conjunction with the accompanying drawings and the preceding background.

### BRIEF DESCRIPTION OF THE DRAWINGS

Implementations of the subject matter will hereinafter be described in conjunction with the following drawing figures, wherein like numerals denote like elements, and:
FIG. 1 is a schematic diagram of an example aircraft system according to at least one of the implementations herein;
FIG. 2 is a schematic diagram of an example system of checklist management for a vehicle according to at least one of the implementations disclosed herein;
FIGS. 3A-3C is a flow chart of an example method of checklist management for a vehicle checklist according to at least one of the implementations disclosed herein;
FIG. 4 is a schematic diagram of an example image of a checklist window on a display of a vehicle according to at least one of the implementations disclosed herein;
FIG. 5 is a schematic diagram of an example image of a task status comparison window on a display of a vehicle according to at least one of the implementations disclosed herein; and
FIG. 6 is a schematic diagram of an image of an example dedicated checklist page showing a checklist field and a task status comparison field on a display of a vehicle according to at least one of the implementations disclosed herein.

### DETAILED DESCRIPTION

The following detailed description includes example implementations that are not intended to limit the subject matter of the application and uses thereof. Furthermore, there is no intention to be bound by any theory presented in the preceding background, brief summary, or the following detailed description.

Implementations of the subject matter described herein relate to systems and methods that provide better checklist task status tracking for tasks on vehicle electronic checklists while reducing the workload for vehicle operators to confirm the status of the tasks. The tasks may be marked as complete on checklists both manually and automatically. Thus, while a vehicle operator may manually mark a task complete directly on a digital checklist displayed on the vehicle, a task status system may receive real-time or current vehicle context data that is processed to determine whether a checklist task has been completed and may automatically mark the task as complete on the checklist without further action by the vehicle operator. By yet another alternative, the task status system may monitor the audio announcements received at the aircraft. The task status system may monitor the announcements to detect when the vehicle operator announces that a task has been completed, and the task status system then may automatically mark that task complete.

To permit the vehicle operator to track the status of the tasks on the checklists, a checklist may be displayed on a dedicated checklist support page or as an overlay or window on an avionics page. Whether or not the pilot is manually confirming task completion on the displayed checklist, a task status comparison window may be automatically shown on the dedicated checklist support page or separately as another window. The comparison window shows a side by side comparison of visual copies of images of objects that indicate a task status. For example, such an object may be a photo of a real vehicle parameter gauge, an image of an animated gauge, an image of another instrument in a cockpit, a synoptic view of a vehicle component such as a flap, or an image of a flight control in a certain position such as a lever or yoke. One of the images (or visual copies) may show an actual or detected status (such as an actual control setting or parameter value), while the other visual copy may show an expected status (such as an expected control setting or parameter value). The difference between the actual and expected status may be immediately understood by a pilot observing the comparison window. Here, the term "pilot" is used interchangeably, and represents singly or collectively, a vehicle user, a vehicle operator, a co-pilot, and any one or more members of an aircrew or flight crew.

With this arrangement, the solutions described above increase checklist compliance. Since the information required for completing the checklist and confirming tasks may be automatically available for the pilot in the checklist support page or checklist window, this arrangement better ensures that pilots have access to the most relevant information without manually searching for the information in multiple locations in a cockpit or instrument panel. The proposed solutions also attempt to monitor cues to the pilot at multiple levels and encourages the pilots to improve their checklist usage thereby improving the situational awareness of the pilot. The solutions also can be used across multiple devices seamlessly. The proposed solutions also promote accuracy in checklist execution and ensures that steps are completed as intended. The proposed solution enhances the effectiveness of checklist completion by providing immediate feedback to pilots in the form of the comparison windows.

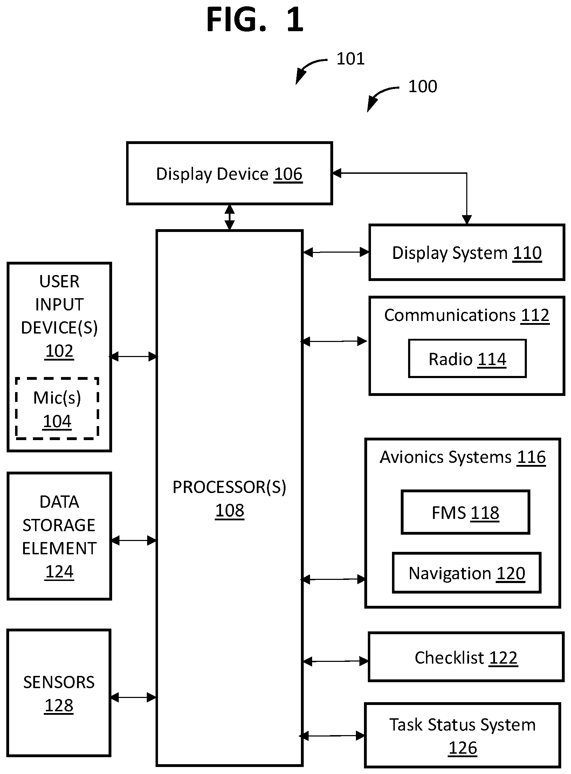

Referring now to FIG. 1, an example system 100 may be used by a vehicle 101, such as an aircraft although any other vehicles using electronic checklists may be used instead such as any watercraft, landcraft (such as trucks or automobiles), spacecraft, and so forth. In an example implementation, the system 100 is at least partially on the aircraft 101 and includes, without limitation, one or more user input devices 102 that may have one or more microphones 104, a display device 106, one or more processors 108, a display system 110, a communications system 112 with a radio 114, avionics systems 116 that may include at least a flight management system (FMS) 118 and a navigation system 120, a checklist unit 122, a data storage element 124, a task status system 126, and a sensors unit 128.

In example implementations, the display device (or display unit (DU)) 106 is an electronic display device capable of graphically displaying flight information or other data associated with operation of the aircraft under control of the display system 110 and/or processor 108. In this example, the display device 106 is coupled to the display system 110 and the processor 108, and the processor 108 and the display device 106 are cooperatively configured to display, render, or otherwise convey one or more graphical representations or images associated with operation of the aircraft on the display device 106, and particularly at least one or more checklist-related pages or windows that show tasks to be performed to operate the vehicle as well as task status comparison windows or pages as described herein in addition to avionics pages used to operate the vehicle, such as a primary flight display (PFD). The user input device 102 is coupled to the processor(s) 108 and may or may not be considered entirely or partially part of display device 106. The user input device 102 and the processor 108 are cooperatively configured to allow a user (e.g., a vehicle operator or a pilot) to interact with the display device 106 and/or other elements of the system 100, as described in greater detail below. By one form, the display device 106 is or has one or more graphical user interfaces (GUIs), and may include or be communicatively coupled to, the user input device 102. Depending on the implementation, the user input device(s) 102 may be a keypad or keyboard (whether physical or virtual), touchpad, mouse, touch panel (or touchscreen), joystick, knob, line select key and/or another suitable device adapted to receive input from a user. This may include touch screens to receive signals to activate a button, toggle, menu options, or other graphical user interface (GUI) arrangements. This also may include a data entry field and the value to be input into that field is typed or selected from a menu. In some example implementations, the user input device 102 includes an audio input device, such as the microphone 104, audio transducer, audio sensor, or the like, which is adapted to allow a user to provide audio input to the system 100 in a "hands free" manner using speech recognition.

The processor 108 is at least one processor formed by processor circuitry and includes the hardware, software, and/or firmware components configured to operate any of the units described herein, to facilitate communications and/or interaction between the elements of the system 100, and to perform additional tasks and/or functions to support operation of the system 100, as described in greater detail below. Depending on the implementation, the processor 108 may be one or more of a general purpose processor such as a central processing unit (CPU), a content addressable memory, a digital signal processor (DSP), an application specific integrated circuit (ASIC), a field programmable gate array (FPGA), any suitable programmable logic device, discrete gate or transistor logic, processing core(s), discrete hardware components, or any combination thereof, arranged to perform the functions described herein. The processor 108 also may be implemented as a combination of computing devices, e.g., a plurality of processing cores, a combination of a digital signal processor and a microprocessor, a plurality of microprocessors, one or more microprocessors in conjunction with a digital signal processor core, a System on a Chip (SoC), or any other such suitable configuration or combination. In practice, the processor 108 includes processing logic that may be configured to perform the functions, techniques, and processing associated with the operation of the system 100, as described in greater detail below. Furthermore, the operations of a method or algorithm described in connection with the implementations disclosed herein may be embodied directly in hardware, in firmware, in a software module (or unit) executed by the processor 108, or in any practical combination thereof. For example, in one or more implementations, the processor 108 includes or otherwise accesses the data storage element (or memory) 124, which may be realized as any suitable non-transitory short or long term storage media capable of storing programming instructions for execution by the processor 108. The code or other computer-executable programming instructions, when read and executed by the processor 108 (or computing device), cause the processor 108 to support or otherwise perform certain tasks, operations, functions, and/or processes described herein.

The display system 110 is the hardware, software, and/or firmware components configured to control the display and/or rendering of the checklists and task status comparison windows described herein, one or more navigational maps, and/or other displays pertaining to operation of the aircraft and/or onboard systems or units 112, 116, 118, 120, 122, and 126 and displayed on the display device 106. In this regard, the display system 110 may access or include one or more databases suitably configured to support operations of the display system 110, such as, for example, a terrain database, an obstacle database, a navigational database, a geopolitical database, a terminal airspace database, a special use airspace database, or other information for rendering and/or displaying navigational maps and/or other content on the display device 106.

In the illustrated implementation, the data storage element 124, which contains databases to operate the aircraft such as those mentioned above and to operate the task status system 126 described below and may include a checklist database, a sensor data database, an actual (or current) vehicle context task status database, and an expected task status database, and so forth. Depending on the implementation, the data storage element 124 may be physically realized using RAM memory, ROM memory, flash memory, cache, registers, a hard disk, or another suitable data storage medium known in the art or any suitable combination thereof.

In the present example, the processor 108 is coupled to the FMS 118 that collects data indicating the current state of the aircraft 101 as well as input from the aircrew and/or external air traffic entities such as the air traffic control (ATC). The FMS 118 then generates flight plans and may activate an automatic pilot to operate the aircraft. Particularly, the FMS 118 automates flight planning, navigation, performance management, and guidance to reduce pilot workload and enhance operational efficiency. Once the FMS 118 processes the various inputs and computes the optimal flight path, the FMS 118 communicates the flight plan to the autopilot and other avionics systems. Additionally, the FMS 118 may calculate fuel consumption, estimated time of arrival, and required thrust settings for different flight phases.

The navigation system 120 is configured to provide real-time navigational data and/or information regarding operation of the aircraft. The navigation system 120 may be realized as a global positioning system (GPS), inertial reference system (IRS), or a radio-based navigation system (e.g., VHF omni-directional radio (VOR) range, or long range aid to navigation (LORAN)), and may include one or more navigational radios or other sensors suitably configured to support operation of the navigation system 120, as will be appreciated in the art. The navigation system 120 is capable of obtaining and/or determining the instantaneous position and heading of the aircraft, that is, the current (or instantaneous) location of the aircraft (e.g., the current latitude and longitude) and the current (or instantaneous) altitude or above ground level for the aircraft.

In the illustrated implementation, the processor 108 also is coupled to the communications system 112, which is configured to support communications to and/or from the aircraft. For example, the communications system 112 may support communication between the aircraft and an air traffic control or another suitable command center or ground location. Thus, the communications system 112 may be realized using a radio communication system or device (or unit) 114 and/or another suitable data link system. The communications system(s) 112 is, has, or communicates with the avionics systems 116 or other external sources, such as, for example, other aircraft, an air traffic controller, or the like.

Depending on the implementation, the communications system(s) 112 may include one or more of a very high frequency (VHF) radio communications system, a controller-pilot datalink communications (CPDLC) system, an aeronautical operational control (AOC) communications system, an aircraft communications addressing and reporting system (ACARS), and/or the like. In the case of datalinks, audio messages may be pre-transcribed into digital messages that are then transmitted to the avionics systems 116 or on the aircraft via the communications system 112.

In example implementations, the processor 108 is also coupled to the other avionics systems 116 in addition to the FMS 118, such as the navigation system 120 and other avionics systems to support navigation, flight planning, and other aircraft control functions, as well as to provide real-time data and/or information regarding the operational status of the aircraft to the processor 108. The system 100 and/or aircraft 101 may include numerous other avionics systems for obtaining and/or providing real-time flight-related information that may be displayed on avionics displays on the display device 106 or otherwise provided to a vehicle operator (e.g., a pilot) or the task status system 126 to determine a current status of the tasks on a checklist. For example, practical implementations of the system 100 and/or aircraft will likely include one or more of the following avionics systems 116 suitably configured to support operation of the aircraft: a weather system, an air traffic management system, a radar system, a traffic avoidance system, an autopilot system, an auto-thrust system, a flight control system, hydraulics systems, pneumatics systems, environmental systems, electrical systems, engine systems, trim systems, lighting systems, crew alerting systems, electronic checklist systems, an electronic flight bag (EFB), and/or another suitable avionics system.

As an unlimited list, the sensors 128 (or sensors unit or system) may be used to monitor the real time state (or context) of the vehicle and this may include monitoring of engines (manifolds, turbines, fuel delivery, vibration levels), hydraulic systems (pressure levels, fluid flow, control surfaces such as flaps, landing gear, and brakes), fuel systems (fuel pressure, flow rate, moisture levels), environmental control systems (cabin pressurization, airflow, oxygen levels), flight control systems (position of ailerons, elevators, rudders, flaps), landing gear (retraction, position, hydraulic pressure), electrical systems (voltage, current levels, potential leaks, smoke detection), cabin and cockpit (oxygen levels, smoke, fire, temperature, passenger comfort systems, electronic passenger communication and entertainment systems, and so forth), avionics and airframe (vibration, corrosion detection, temperature, fluid leaks), and emergency oxygen systems (oxygen flow). Others not listed here may be used as well.

Otherwise, in various implementations, sensors 128 also may be used for aircraft motion control and navigation. In this case, the sensors 128 supplies, without limitation, one or more of: inertial reference system measurements providing a location, Flight Path Angle (FPA) measurements, airspeed data, groundspeed data, vertical speed data, vertical acceleration data, altitude data, attitude data including pitch and roll measurements, yaw data, data related to ownship weight, time/date information, heading information, data related to atmospheric conditions, flight path data, flight track data, radar altitude data, geometric altitude data, wind speed and direction data, and so forth.

The type of sensors 128 providing data on the aircraft to perform the monitoring may include temperature sensors (thermocouples, resistance temperature detectors, infrared sensors), pressure sensors (manifold pressure sensors, fuel pressure sensors, hydraulic pressure sensors, cabin pressure sensors), vibration sensors (accelerometers, piezoelectric sensors), flow sensors (fuel flow sensors, airflow sensors, oil flow sensors), position sensors (potentiometers, linear variable differential transformers, rotary encoders), proximity sensors (inductive sensors, capacitive sensors, optical sensors), oxygen sensors (oxygen depletion sensors, oxygen flow sensors), voltage and current sensors (voltage sensors, current sensors), leak detection sensors (fluid leak sensors, gas leak sensors), smoke and fire sensors (smoke detectors, heat sensors), and chemical sensors (corrosion detection sensors, moisture sensors). Others may be used that are not listed here.

The term sensor (and in turn the sensors unit 128) includes software diagnostic applications in addition to mechanical or physical sensors. Thus, a continuous monitoring application or system, or a built-in-test (BIT) type of application, may be referred to as, or is included as, sensors for the purposes of describing the present application herein. Thus, the monitoring of avionics systems such as the autopilot, navigation system 120, flight management system (FMS) 118, and/or checklist systems to name a few examples may be monitoring real-time task execution to provide task status displays or announcements, CPU loads, memory usage, data integrity, error logging, redundancy management, and so forth, in addition to providing expected parameter values to be compared to actual parameter values generated from physical sensors on aircraft physical components. Other sensors may monitor the workload and health of the air crew.

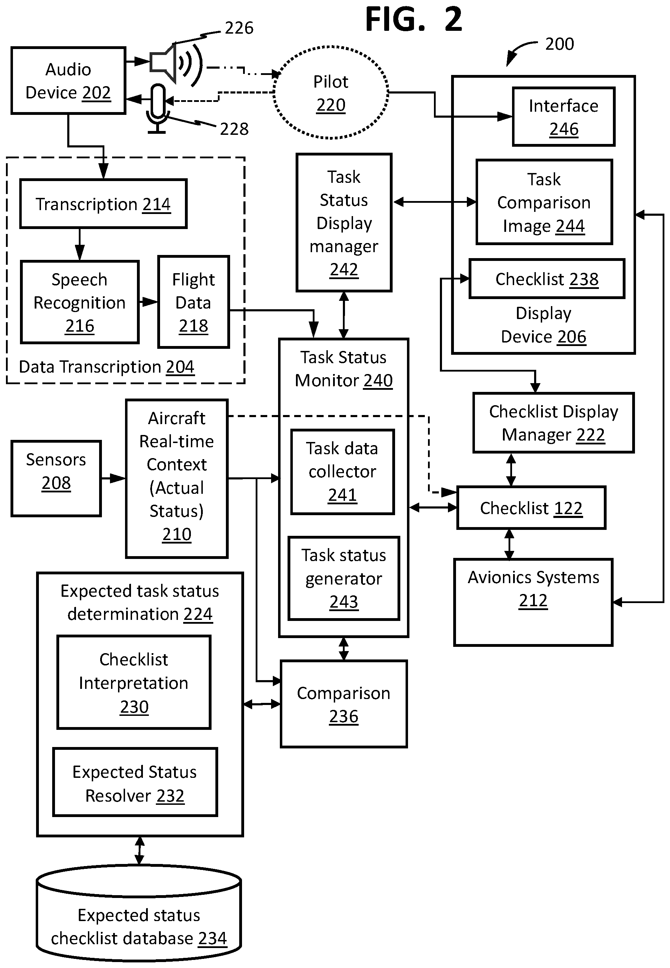

The processor 108 also is coupled to the checklist unit 122 and the task status system 126 to monitor task status and display the status to the pilot or air crew as described in greater below with FIG. 2.

It should be understood that FIG. 1 is a simplified representation of the system 100 for purposes of explanation and ease of description, and FIG. 1 is not intended to limit the application or scope of the subject matter described herein in any way. It should be appreciated that any of the systems, units, and devices of system 100 may be entirely onboard the aircraft or partially onboard and partially remote from the aircraft. By one form, at least the display device 106 and sensors 128 are entirely onboard. Those parts of systems, modules, and units of system 100 external to the aircraft may be communicatively coupled to the remaining elements or parts of the system 100 on the aircraft (e.g., via a data link and/or communications system 112). Similarly, in some implementations, the data storage element 124, or parts thereof, may be located externally to the aircraft and communicatively coupled to the processor 108 via a data link and/or communications system 112. Furthermore, practical implementations of the system 100 and/or aircraft will include numerous other devices and components for providing additional functions and features, as will be appreciated in the art. In this regard, it will be appreciated that although FIG. 1 shows a single display device 106, in practice, additional display devices may be present onboard the aircraft. Additionally, it should be noted that in other implementations, features and/or functionality of processor 108 described herein can be implemented by or otherwise integrated with the features and/or functionality provided by the FMS 118. In other words, some implementations may integrate the processor 108 with the FMS 118. In yet other implementations, various aspects of the subject matter described herein may be implemented by or at an electronic flight bag (EFB) or similar mobile electronic device that is communicatively coupled to the processor 108 and/or the FMS 118 (or has the processor 108). Thus, the display device 106 may be a mobile device that displays one or more checklist-related pages and a status comparison window as described herein at least while the display device 106 is aboard the aircraft.

Referring to FIG. 2, a task status system or unit 200 is the same or similar to the task status system 126, and monitors tasks on vehicle checklists to determine whether the tasks are adequately completed, automatically marks tasks as completed if not done so by the pilot, and displays both actual and expected representative task status objects, and by one form objects side-by-side, in a comparison window on a display on the vehicle. This may be displayed to the pilot for fast and easy understanding of the status of a task without significant workload searching for various information around a cockpit to confirm the status of the task. The task status system 200 is operated by the processor 108, and may or may not include the checklist unit 122. In one or more example implementations, the task status system 200 may be implemented or otherwise provided entirely onboard the vehicle (or aircraft) 101. However, in alternative implementations, the task status system 200 may be at least partially implemented independent of any aircraft or vehicle, except for a display device and sensors on the vehicle that communicates remotely with other units of the task status system 200 and shows the checklist and comparison pages or windows on the aircraft or vehicle.

The example task status system 200 here includes an audio device 202 with one or more speakers 226 and one or more microphones 228 (such as microphones 104 (FIG. 1)), a data transcription unit 204, a display device 206, sensors (or sensors unit) 208, an aircraft real-time context (ARC) (or actual status) unit 210, and one or more avionics systems 212 the same or similar to avionics systems 116. Thus, by some examples, an avionics audio message may be received from the ATC, Automatic Terminal Information Service (ATIS), Terminal Weather Information for Pilots (TWIP), Airline Operational Control (AOC), and/or other broadcast entities. In some implementations, the messages from the radio 114 are emitted from the speakers 226, whether loudspeakers or headphones worn by a pilot.

Also by one form, the audio device 202 may include any sort of microphone 228, audio transducer, audio sensor, or the like capable of receiving voice or speech input. In one or more implementations, the audio device 202 may have the microphones 228 (or 104) onboard the aircraft to receive voice or speech annunciated by a pilot or other crewmember onboard the aircraft. The data transcription unit 204 may have a transcription unit 214 that converts audio signals into textual features, phoneme and so forth, while a speech recognition unit 216 uses decoders to recognize words, and a flight data unit 218 uses language models to understand the words and determine what language is relevant to the vehicle (or aircraft). This may include the recognition of tasks announced by an ATC or other broadcast entity for example, and/or recognition of speech of a pilot 220 speaking into the microphones 228 to repeat the ATC instructions and/or, more relevant here, the pilot announcing a task on a checklist has been completed whether announcing to the broadcast entity over the radio 114 or to other crew members.

Specifically dedicated to checklists and task status, the task status system 200 may have the checklist unit 122 that communicates with the avionics systems to know which checklists to display and which tasks to display on each checklist, and then has the checklist display manager 222 provide checklist image data to the display device 206 to display a checklist 238. By one available example, the checklist unit 122 may encompass or be part of Engine Indication and Crew Alerting Systems (EICASs), Electronic Centralized Aircraft Monitor (ECAMs), the FMS, and/or other electronic checklist (ECL) software. Otherwise, the checklist unit 122 may initiate display of a checklist selection menu and a pilot may select a checklist and/or modify the checklists to be used or the order of the checklists in some examples.

By one example implementation, the task status system 200 also may have an expected task status determination unit 224 with a checklist interpretation unit 230 and an expected status resolver unit 232. Generally, the checklist interpretation unit 230 parses and understands the procedural checklist (pre-flight, takeoff, landing, etc.), and determines the required system configurations and acceptable states for each step. Thus, the checklist interpretation unit 230 may associate checklist items with system expectations (*e.g.*, "Flaps 10°" links to flap position sensors and actuator status). The expected status resolver unit 232 then may convert high-level checklist intent into low-level system expectations (*e.g.*, if the checklist item is "Set Altimeter to local pressure," it resolves that language to refer to: cockpit altimeter knob must be set to X, and altimeter sensor reading must match). Example inputs to the expected status resolver unit 232 may be vehicle (or aircraft) context data (phase of flight, aircraft model, etc. and including the real-time vehicle context data) and system configuration rules. The expected status resolver unit 232 may generate a structured expected state, such as flap position = 10°. The expected task status determination unit 224 may use an expected status checklist database 234 storing predetermined data used to establish expected task statuses for any of the operations of the expected task status determination unit 224.

The task status system 200 has a task status monitor unit 240 that receives the sensor data and parameters from the aircraft real-time context unit 210, and has a task data collector unit 241 that groups the data and parameters that are used to indicate the actual status of a single task. The task data collector unit 241 or other unit of the task status monitor unit 240 then uses the group of data and parameters for a single task to form a single actual status value, if not already directly provided as a sensor data value or computed parameter value from the aircraft real-time context unit 210.

The task status system 200 has a comparison (or comparator) unit 236 to compare actual and expected status, and determine a difference between the two. The task status monitor unit 240 also then receives the results of the comparison and has a task status generator unit 243 to make conclusions about the status of a task as well as whether and how to display the difference. When instructed, the task status display manager 242 provides image data to the display device 206 to display a task comparison window or image 244 that indicates the difference, if any, between the expected and actual task status. The display device 206 also may have the user interface 246, such as a graphical user interface, to receive input from the pilot 220 when the pilot is manually marking tasks complete on the checklist 238.

It will be appreciated herein that the terms display, image, page, and picture may be used interchangeably to represent a rendering on the display device 206. Other avionics pages may be displayed on display device 206 as well, including displaying task status comparison pages or comparison windows.

One or more of the units or sub-units shown on the task status system 200 may be considered separate from task status system 200, where the task status system 200 is alternatively formed of at least the expected task status determination unit 224, the comparison unit 236, the task status monitor unit 240, and the task status display manager 242, while the other units mentioned may operate independently. More details of the units of the task status system 200 as well as details of the operation of the task status system 200 are provided below with the description of process 300.

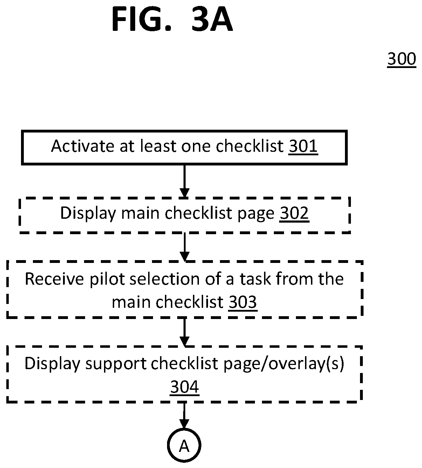

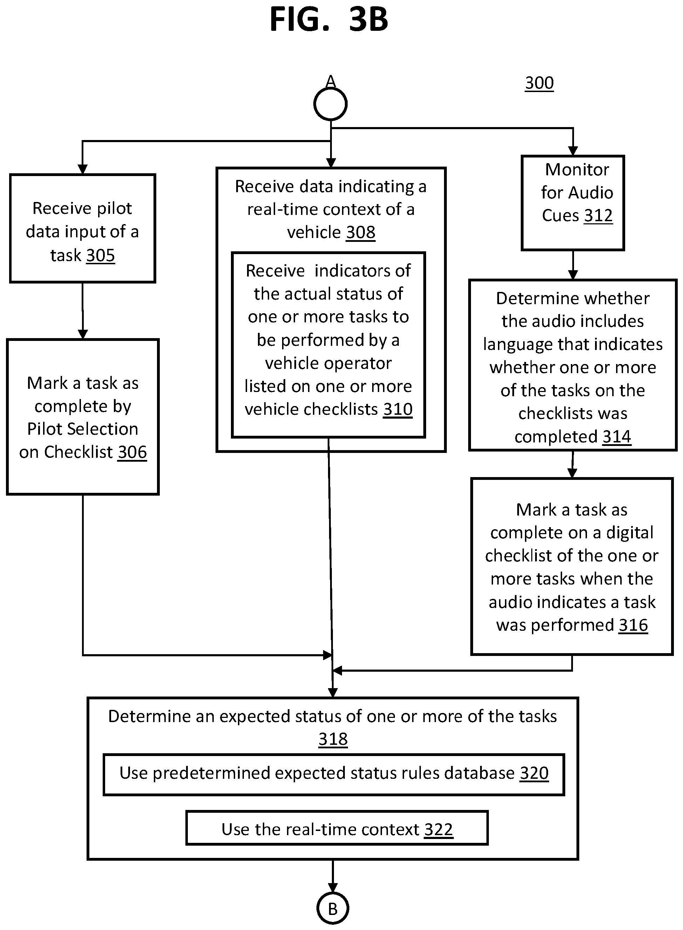

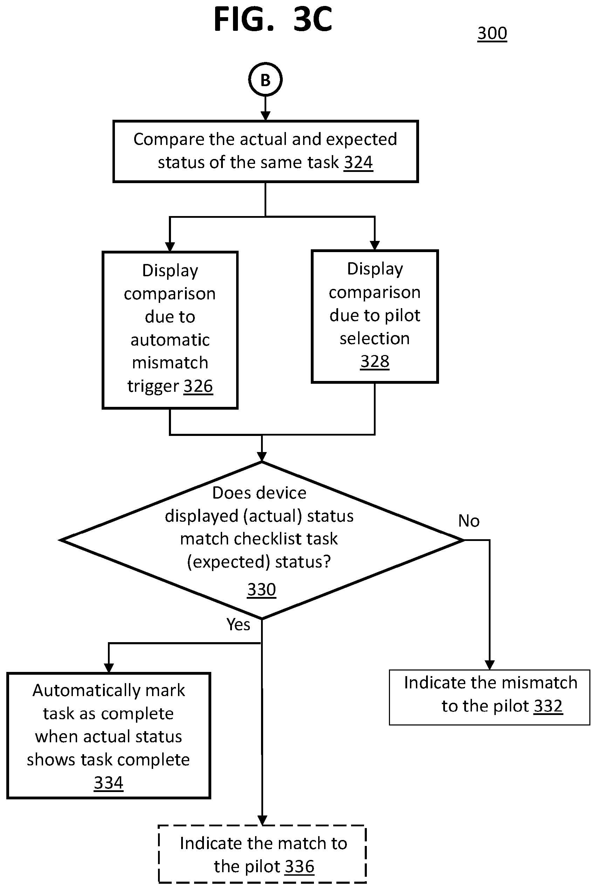

Referring to FIG. 3A-3C, a process 300 of task status monitoring and display for a vehicle checklist is described according to at least one of the implementations herein. The process 300 includes operations 301 to 336, generally numbered evenly. Systems, device, modules, units, and display pages of any of FIGS. 1-2 and 4-6 may be referred to when explaining process 300 where relevant.

Process 300 may include "activate at least one checklist" 301. Thus a checklist system being operated by the checklist unit 122 may be activated in an always-on mode or may be automatically activated when the vehicle power is turned on. Otherwise, a checklist system may be turned on manually by a pilot or vehicle operator by a real, physical switch or a virtual switch. By yet other alternatives, a checklist trigger such as a signal from the avionics systems 212 that indicate a start of a phase of a mission or otherwise indicate operations, vehicle components, and/or systems that need to be monitored with a checklist. Also, automatic detection of conditions needed for a checklist may be determined by the use of sensors, and/or monitoring of the audio between broadcast entities, such as the ATC, and the pilot, or among the aircrew when multiple vehicle operators are aboard, or any combination of these. The sensor data is used as explained below for monitoring the real-time state and context of the vehicle.

The checklist unit 122 may obtain predetermined checklists from a database and may include standard checklists, checklists customized for the type of aircraft, or customized for the specific aircraft. The checklists may be updated as such checklists are updated for the aircraft. Some example checklists relate to timing, phase, or stage of a mission and may include a starting engine checklist, an after starting engines checklist, a taxi/before take-off checklist, a line-up' checklist, a before take-off checklist, and so forth. Other example checklists may be provided for specific vehicle operations, components, or systems such as landing gear deployment/retraction, fuel management tasks, cabin pressure settings, aircraft lighting (landing lights, taxi lights, etc.), anti-icing systems, oxygen system management, autobrake settings, aircraft navigation settings (waypoints, routes, etc.), fuel flow/engine power settings, weight and balance warnings, flight path angle (climb/descent rates), oxygen mask deployment, auto-land, speed brakes (spoilers), trim control adjustments, landing flap settings, autothrust/autothrottle, air conditioning/pressurization control, windshield wiper operation, cargo compartment temperature or ventilation, aircraft configuration changes (e.g., seat configuration, galley setup), airfield/taxiway lights, flight data monitoring and alerting, seatbelt sign control, cargo door/access panel automation, autopilot approach mode (for instrument landing system (ILS), vertical navigation (VNAV), etc.), weather radar adjustment, and many others. The operation, type, or objective of the checklists is not particularly limited for the purposes of the task status monitoring and display disclosed herein.

As mentioned in the above implementations, the checklist unit 122 may be arranged to generate and manage operational checklists for an aircraft or aircrew during various phases of flight, and this may include normal, abnormal, and/or emergency situations. First, the pilot may view a checklist selection page and select one or more checklists to display and use, and that are provided to the checklist unit 122, and in turn the checklist display manager 222.

Also, the checklist unit 122 may operate in communication with avionics systems 212, and specifically at least the FMS 118, the navigation system 120, and other flight-critical systems. The avionics systems 212 may provide flight phase information, system status data, and operational context that enables the checklist unit 122 to determine which checklist is most relevant to current or predicted flight conditions. For example, the checklist unit 122 may monitor phase-of-flight information (e.g., takeoff, climb, cruise, descent, and/or approach) as determined by the FMS 118 and navigation system 120, and automatically select or prepare checklists that correspond to those flight phases.

In addition to avionics-derived data, the checklist unit 122 may receive real-time sensor and system parameter data from the aircraft real-time context unit 210, which aggregates aircraft state information such as engine performance, control surface status, hydraulic and electrical system readings, environmental conditions, and other sensor-derived parameters. By analyzing these inputs, the checklist unit 122 can detect abnormal or off-nominal conditions and proactively generate or highlight appropriate checklists (*e.g.,* engine failure, cabin depressurization, hydraulic loss) even before a crew-initiated selection.

Furthermore, the checklist unit 122 may also receive broadcast or directed communications such as air traffic control (ATC) instructions or automated airspace alerts via an audio system or radio 114 system, allowing it to incorporate externally issued directives into relevant procedural tasks or prompt a crew response checklist (*e.g.,* holding instructions, diversion routing, or weather deviation procedures).

Also, the checklist unit 122 may determine which checklist to present based on a rules-based or condition-driven architecture. For instance, predefined logic may map specific conditions or combinations of conditions to checklist types. In one example, if the aircraft real-time context unit 210 detects a drop in cabin pressure beyond a defined threshold, and the avionics systems 212 confirm the aircraft is above 10,000 feet, the checklist unit 122 may automatically display an emergency descent checklist. Checklists may be populated dynamically with task content tailored to current aircraft configuration, sensor status, and flight parameters. Checklists are then displayed via cockpit interfaces such as EFBs, multifunction displays, or dedicated checklist displays, and may support interaction modes such as pilot confirmation inputs, completion tracking, and synchronization across crew stations.

As explained below, the activation initiates monitoring of the checklists as well to determine task statuses, such status may be recorded and modified that are checklist files stored in a database for example. This is separate from the display of the checklists.

Thus, optionally, process 300 may include "display main checklist" 302, and this refers to the typical checklist page (not shown) displayed on the vehicle or aircraft in contrast to the checklist support page described below. In this case, the pilot 220 may view a menu of checklists on the display device 206, and then use the user interface 246, whether by touch screen or mouse for example, to select a main checklist to be used and displayed. By one form, as mentioned above with the activation operation 301, the main checklist page may be displayed automatically once certain triggers or criteria are established.

Otherwise, as explained below, the task status analysis may be performed even when the main checklists are not displayed. This may occur when the pilot is simply performing the checklist tasks by memory instead of using a main checklist.

Once the main checklist is displayed, however, the pilot may select a task on the main checklist that triggers rendering of the checklist support page or overlays. This may occur when the pilot may want to check the status of a task without looking at multiple screens or different areas or stations in the cockpit for example. Thus, process 300 may include "receive pilot selection of a task from the main checklist" 303. Thus, once such a selection is made, say the task is flaps or landing gear, then the support checklist page or overlay(s) are displayed. Alternatively, it should be noted that the support checklist page or overlays may be automatically displayed when a task is found to be incomplete as described below.

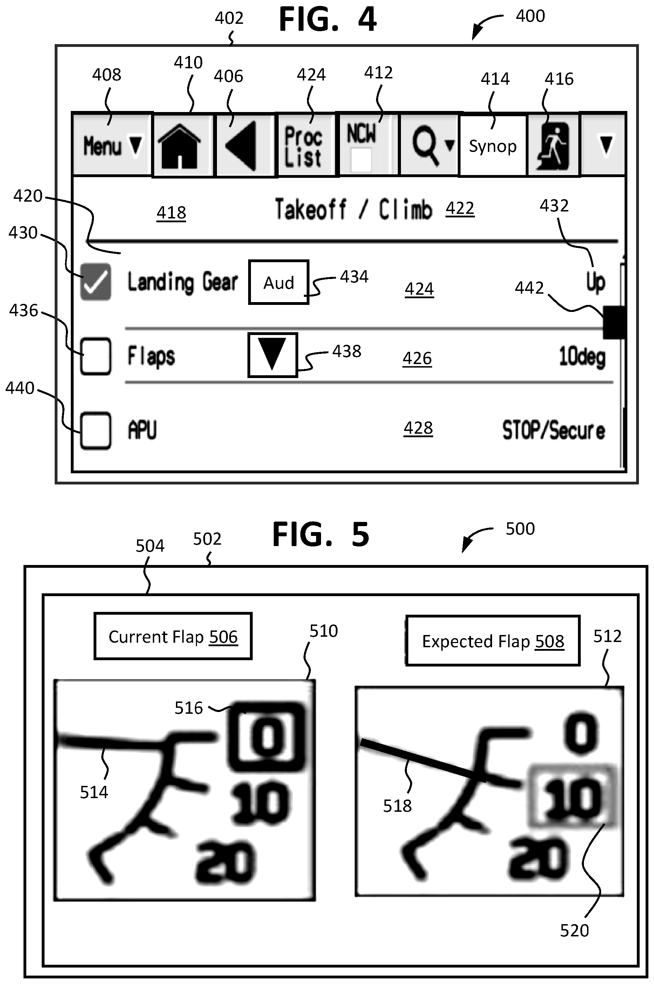

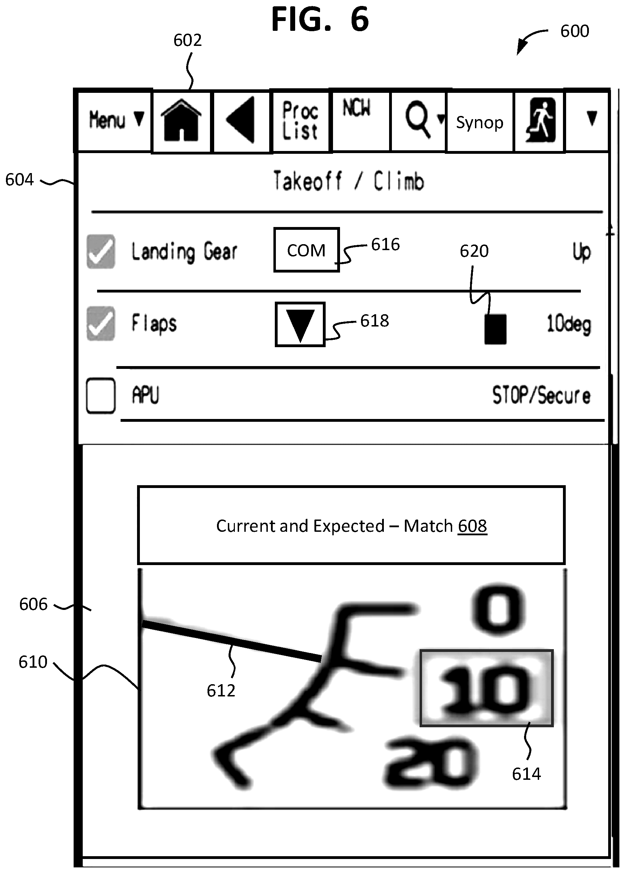

For either reason (manual selection or automatic display) and while referring to FIG. 4, operation 302 may include "display support checklist page/overlay(s)" 304. By one example form, a display 400 shown on display device 206 shows a display page 402 with a checklist overlay 404. The display page 402 may be an avionics page in this example but may be an example dedicated checklist support page instead of using one or more overlays and that is shown in FIG. 6 described below. Here, the display or avionics page 402 may be a PFD, a Navigation Display (ND), an Engine Indication and Crew Alerting System (EICAS), an Engine Monitoring Display, a Multi-Function Display (MFD), and so forth. Such an avionics page 402 may be shown on any display unit (DU) forming the display 400 and on a cockpit display device or any other display device including mobile devices such as the EFB, a tablet, a touch screen control (TSC) display, a satellite data unit (SDU) display, and so forth. While the checklist overlay 404 is shown covering most of the avionics page 402, the checklist overlay 404 may be limited to a corner or certain section of the avionics page when desired.

The checklist overlay 404, which may be considered checklist 238 (FIG. 2), may have buttons or tabs on a tab bar 406 to show different types of images or views. Most relevant here, a drop down menu 408 may be provided to select different checklists or other alternatives, while a "proc list" (process list) tab 410 may provide access to a list of standard and non-normal procedures and tasks that are stored in the aircraft's Electronic Checklist (ECL) or Electronic Flight Bag (EFB) system. A Normal Checklist Workflow (NCW) tab 412 may initiate or manage standard operational flows for using and displaying checklists during a flight or mission, such as by showing and providing checklists in a certain sequence, starting with pre-flight or starting engines checklists for example, and so forth. The NCW tab 412 also may provide views for auto progression monitoring of the checklists as well as guidance, alerts, and/or time-sensitive reminders. A synoptic tab 414 may provide images of vehicle components in actual existing (or real-time) positions, such as with a side view of flaps or landing gear, or an overhead view of the aircraft with an engine graphic indicating status of each engine, to name a few examples. Also, the tab bar 406 may have an emergency evacuation procedure or checklist tab 416.

The checklist overlay 404 has a checklist field 418 to show a checklist 420 that may be part of a main checklist, but otherwise an originally generated checklist or a copy of an entire main checklist that is already generated or shown on a separate dedicated checklist page. Here, three tasks are shown, but more may exist. A slider 442 may be provided to move the field up and down the checklist 420. In the present example, the checklist 420 is has a title here being "Takeoff/ Climb" 422 to indicate the subject matter or operation of the checklist 420, and tasks rows 424 to 428 numbered evenly, and here being a landing gear row 424, a flaps row 426, and an auxiliary power unit (APU) row 428. Each row may have, from left to right, a check box to indicate the task was completed, a title of the task, a source indicator area 434 that indicates a source that entered the completion check in the completion check box 430, and the desired status to be achieved for the task. For example, the landing gear row 424 shows the task checked complete at check box 430, and the desired status is landing gear up 432 and that has been completed or confirmed.

A source indicator "Aud" 434 indicates the flight data unit 218 recognized the confirmation as an audible announcement by monitoring the announcements by the pilot in the cockpit. In the flaps row 426, the source indicator area 438 shows an arrow, letter, or other symbol that indicates the row is selected to show the expected and actual status of the relevant task in the comparison window of the task as described below in FIG. 5. When the check box 430, 436, or 440 is checked, but the source indicator area 434 or 438 is blank, this may indicate the user or pilot manually checked the checkbox. Otherwise, the source area 434 or 438 may show a letter or symbol that indicates the pilot manually entered the completion check. Likewise, when the task status system 200 detects that the pilot mentions a task is complete, the source indicator area 434 may use the "Aud", or just A or other letter, or may use a symbol, such as a microphone symbol in addition or instead of just the "Aud" source indicator 434. Similarly, as explained below, when real-time aircraft context monitoring is used to detect a task is complete based on sensor data or parameters computed from using the sensors, then a different source indicator may be used such as the term "COM" to indicate completed by computer (shown on FIG. 6). Many variations may be used as the completion source indicators. The further use of the source indicators are explained below as well.

The flaps row 426 shows a desired status of 10deg to indicate the target or expected angle of the flaps. A third task row 428 is for the APU, which provides electrical power and pneumatic (air) pressure to the aircraft when the main engines are not running, and to operate powered systems such as air conditioning, lights, avionics, and engine starting systems. Depending on the aircraft, the APU typically is used only on the ground during a normal flight and should be turned off when the aircraft is in the air, although the APU may be used as a backup system in the air.

Thus, the status of an APU shows "STOP/Secure" which indicates the APU is to be shut down usually by switching an APU master switch to OFF or using an APU STOP button. The turning off of the APU also may involve ensuring that the APU is fully shut down, and that all related systems (such as an APU bleed air, electrical load, or fuel supply) are also disengaged and should be confirmed. The confirmation may be performed by observing APU indicator lights on the instrument panel of the cockpit or by other methods, including automatic monitoring and/or announcement by the pilot.

Continuing with process 300, and as mentioned, at least three different ways exist to mark a task complete (or confirmed): (1) manually by the pilot, (2) automatically by monitoring the real-time context of the aircraft, and (3) by monitoring the announcements on the aircraft including the announcements by the pilot. The last two marking operations may be provided automatically even though the pilot has not marked a task on the checklist complete, and even when the pilot has not even opened the main checklist either as a separate page or as part of the checklist support page or overlay. Each are described in turn as follows.

With regard to the manual marking, the pilot 220 will have already viewed a checklist menu on the display device 206, and use the user interface 246, whether by touch screen, mouse, or other device, for example, to select a main checklist to be used. Then, process 300 may include "receive pilot data input of a task" 304. In this case, the pilot now uses the user interface 246 to check a task complete on the main checklist. Alternatively, the pilot first may select a task on the main checklist to display the checklist overlay 404 or dedicated checklist support page (FIG. 6) showing the selected task. In this case then, the pilot may mark the checkbox complete on the displayed checklist support page or overlay 404. The checklist display manager 222 receives the confirmation from the interface and may provide the confirmation (or confirmation signal) to the checklist unit 122. The checklist display manager 222 also changes the displayed checklist 238 to show that the relevant task was completed, and in this example of displayed checklist 420, shows the check box 430 is checked as completed for the landing gear.

Process 300 may include "mark a task as complete by pilot selection on checklist" 306. Thus, the checklist unit 122 updates the checklist data of the digital checklist corresponding to the displayed checklist. Thus, the marking in this case may be on both a digital checklist kept in a memory or a database and as shown on a digital image of at least the main checklist, but also the checklist support page or overlay 404, shown on the vehicle. This is repeated for any manually entered confirmation or other checklist data provided by the pilot.

Now regarding the automatic monitoring of aircraft real-time context to update confirmations on the checklists, process 300 may include "receive data indicating a real-time context of a vehicle" 308, and this may include "receive indicators of the actual status of one or more tasks to be performed by a vehicle operator listed on one or more vehicle checklists" 310. This involves the sensors unit 208 providing sensor data and/or parameters computed by using the sensor data to the aircraft real-time context unit 210, which may compute more parameters. The sensor data and/or parameters are then provided to the checklist unit 122 to be used to determine what checklists and tasks are to be used and displayed, and the task status monitor unit 240 to be used to determine the actual status of a task listed on the checklists being used.

The task status monitor unit 240 has the task data collector unit 241 to determine which sensor data and parameters are to be used to determine the status of a single actual task. By one form, this is done for tasks that are listed on a manually selected and open main checklist being displayed. In this case, the sensor data and parameters needed to display the task status of the tasks on the task list of a checklist support page or overlay may be copied from the data of the main checklist. By alternative forms, the task status monitor unit 240 may obtain the sensor data and parameters from one or more of the vehicle data buses when no main checklist has been opened for certain tasks. This permits dynamic creation of the checklist support page (or overlays) when the pilot is performing the checklists by memory rather than using the main checklist for example.

In either case (whether or not a main checklist was open and being used), the task status system 200 and process 300 may do a preliminary determination that tasks are complete by using the vehicle context monitoring data and marking the tasks complete by using a preliminary, separate process that has criteria and thresholds for the tasks different from that used for the expected-actual status comparisons described below. Otherwise, such a preliminary operation is omitted as redundant, and the process 300 proceeds with comparing expected and actual status of a task.

Continuing with the third way to mark tasks as complete, process 300 may include "monitor for audio cues" 312, where the microphones 104 may be used to listen to the announcements in the cockpit or vehicle by the pilot, and the audio device 202 provides the audio signals to the data transcription unit 204 to detect a task confirmation.

Process 300 may include "determine whether the audio includes language that indicates whether one or more of the tasks on the checklists was completed" 314. Thus, either the flight data unit 218 or the task status monitor unit 240 may have predetermined task-related phrases lists stored in memory that indicate a task has been completed. By some random examples used herein, the pilot may announce "gear is up and locked", "flaps at ten", or "APU shut down", after completing the tasks. By using the predetermined task confirmation phrase lists stored and accessed by the flight data unit 218 or the task status monitor unit 240, the task status monitor unit 240 may conclude these tasks have been completed and checked off. By one form, analyzing the audio alone is sufficient to check tasks as complete, while in other forms, the audio analysis may be used only to confirm a finding by the using the real-time aircraft context analysis.

Process 300 may include "mark a task as complete on a digital checklist of the one or more tasks when the audio indicates a task was performed" 316, where the task status monitor unit 240 marks the completed tasks of the digital version or file of the checklist. This also may include having the task status display manager 242 mark the task complete as mentioned above for the displayed checklist overlay 404 and/or a main checklist being displayed. This also includes showing the audio task indicator 434 on the task row for the tasks being marked complete based on the audio announcements. This permits the pilot to look at the lists and see which tasks were completed or confirmed audibly even when the pilot did not manually mark the tasks complete so that the pilot does not need to solely rely on memory to remember which tasks were already performed even when performing the tasks of the checklist by memory.

Turning now to performing the comparisons of the task statuses, process 300 may include "determine an expected status of one or more of the tasks" 318, and operated by the expected task status determination unit 224. The this may include having the checklist interpretation unit 230 obtain the expected status directly as the target status that may be listed on (or for) the displayed checklist and/or the digital checklist. Thus, when the flap task on one of the checklists has a desired or target status of 10 degrees, then that becomes the expected status. Otherwise, the expected status may be determined by using (a) the real-time context to determine dynamic criteria used to indicate the expected status, (b) static predetermined rules based on prestored aircraft procedures or prestored aircraft conditions, and (c) expected status settings indicated by an announcement to or by an operator of the vehicle.

Thus, operation 320 may include "use predetermined expected status rules database" 320, and where the checklist interpretation unit 230 determines if the checklist task being analyzed has corresponding expected status in the expected status checklist database 234. The expected status checklist database 234 may list expected statuses for predetermined flight phases, aircraft situations, and specific other checklists. This may include interpreting which sub-tasks or settings are needed for an expected status to exist, such as which sensors are involved and which sensor values are used as criteria, and so forth. For audio monitoring, the target values in an announcement from the ATC may be recognized as an expected status and placed on a checklist as well. Otherwise, operation 320 may include "use the real-time context" 322. Here, the expected status resolver 232 uses the real-time (and non-real-time) vehicle context data to obtain the situations of the aircraft and compare the data of those situations to criteria, and by one form, using rule-based algorithms where the criteria is determined by the checklist interpretation unit 230, for example. This determines when an expected status exists based on the real-time vehicle context data.

Process 300 may include "compare the actual and expected status of the same task" 324, as performed by the comparison unit 236, and where the actual and expected status are compared to each to determine whether the task achieved the expected status and therefore, the task is complete. Depending on the task, this may include tolerance ranges, such as when the ATC instructs 10000 feet as an elevation task, and the sensors indicate the aircraft is at 9975 feet. This may be considered well within an acceptable tolerance and the elevation task will be considered complete. The result may be a value that indicates the difference between the expected and actual status values if a numerical result is provided, or otherwise a difference 'code' may be generated when the result is a difference in binary states, such as on or off. Other variations may be used as well for non-numerical differences between actual and expected status.

As to the display of the results of the comparison, process 300 may include "display comparison due to automatic mismatch trigger" 326, and "display comparison due to pilot selection" 328. Thus, by one example form, the task status monitoring is continuous once activated, and by one form, all tasks on all active checklists are monitored. By one example arrangement, once a task is marked complete, it is no longer monitored. By an alternative arrangement, the monitoring of all tasks continues whether marked or confirmed completed or not on active checklists in case a completed task is to maintain a certain status and deviants from that status. The system may catch such a deviation and report it to the avionics systems and alert the pilot. The display of the comparison results by selection of a task by the pilot for operation 328 is as mentioned above with the operation 303, repeated here for consistency.

Process 300 may include the inquiry, as performed by the comparison unit 236, "does device displayed (actual) status match checklist task (expected) status?" 330, where the actual status may be displayed as a parameter on an avionics display or instrument panel on the vehicle or aircraft in some circumstances, although the actual status may be obtained from other sources as mentioned above. Likewise, the expected status may be retrieved from a checklist but may be obtained from other sources as explained above. Also, the inquiry refers to the task status generator unit 243 receiving the difference value or difference code from the comparison unit 236 and determining a final status of the task by using the difference value or code. This may include comparing the difference value or code to predetermined comparison result tables, thresholds, or using rule based algorithms, and so forth to determine if the expected and actual status match (or are sufficiently similar).

Referring to FIG. 5, when the difference is found to be significant such that the status of a task is found to be incomplete, process 300 may include "indicate the mismatch to the pilot" 332, and this may be performed by the task status display manager 242. In this example, a display 500 shows an avionics page 502 with a comparison window overlay (or just comparison window or field) 504, although the comparison window may be displayed on a dedicated checklist support page 602 (FIG. 6) described below. If the displaying is in response to the mismatch, the displaying of the results in the comparison window 504 may occur regardless of whether or not an operator of the vehicle opened a display of the main checklist or any checklist.

The comparison window 504 also may have an actual status title (or title box) 506 and an expected status title (or title box) 508 to label object images actual or expected that are being used to show the status comparison. The title boxes 506 and 508 also may mention the name of the task being compared. The titles (or title boxes) may be changed visually such as with highlighting, font, format, background, pattern, line work, and so forth to indicate whether the comparing result is a mismatch between the expected status and the actual status of the relevant task being analyzed.

The comparison window 504 also may have one or more visual copies of an object used to indicate the status of the task on the vehicle with a first visual copy 510 showing an actual task status and a second visual copy 512 showing an expected task status. By one form, the first visual copy is a first version of an object relevant to the task and that may show, indicate, or represent the actual status, and may include an actual status value or parameter value. Likewise, the second visual copy is a second version of the object relevant to the task and that may show, indicate, or represent the expected status, and may include an expected status value or parameter value. A database may store such objects (or object images) or synoptic views for each or individual task on all or individual available checklists, and where it makes sense to have such object images. By one form, such objects are only stored for checklists deemed standard checklists for the vehicle or aircraft.

By one example implementation, the objects may be copied from a synoptic display page (not shown and that may be viewable from the synoptic button or tab 414 for example) and that is modified to display the first and second visual copies. For example, if the task is to put landing gear down, then the task status display manager 242 may open a Flight Control System (FCS) synoptic display which has image data of a picture of the landing gear in a current or other position, and creates the first visual copy showing the landing gear in a current position and the second visual copy showing the landing gear in the expected condition (here being landing gear down). These are then placed in the comparison window to show the difference in position of the two landing gear statuses.

In the example of comparison window 504, the objects or visual copies 510 and 512 may be parameter gauges, and specifically flap angle gauges as shown. The gauges 510 and 512 may or may not be visual copies of real gauges or virtual gauges that are visible on the instrument panel of an aircraft to attempt to match objects that the pilot usually observes on the aircraft so that the pilot immediately recognizes the objects thereby reducing cognitive energy (or workload) to understand the comparison window. In this example, the actual status gauge 510 shows a needle 514 and a status frame 516 indicating a zero (0) flap angle, while the expected status gauge 512 shows a needle 518 and frame 520 indicating 10 degrees, thereby indicating a difference of 10 degrees and that the task is incomplete.

In the alternative, the objects being shown for the comparison may take a number of different forms. Thus, by one example, the object may be the effector or vehicle component in a certain position rather than the parameter gauge shown on the comparison window 504. For the implementation for flaps for example, a synoptic view of a side view of a flap at a certain angle may be shown as the object. By yet another alternative implementation, the object may be a view of the flight control that has a plurality of available operational mode positions having distinct functions. This may involve one or more cameras in a cockpit to monitor the flight control positions and status. For the example of the flaps again, the visual copy of the object may include showing an image of a flap control lever position (or flap selector position), and by one form, with indents on a panel of the lever (such as at 0, 5, 10, 20, and 30 degrees).

By yet another alternative implementation, the visual copy of the object may be an image of a parameter shown on an instrument panel of the cockpit or vehicle, or a display in the cockpit or vehicle that shows the relevant parameter. For the flaps example, flap positions are often digitally monitored and shown on the Electronic Centralized Aircraft Monitor (ECAM), Engine Indication and Crew Alerting System (EICAS), and/or multi-function display (MFD) systems. Thus, the object may be an image of the entire display, or a close-up of just the flap parameter on the display. By yet another contrasting alternative, the parameter value may be shown alone or within a frame on the comparison window (rather than as a visual copy of an object). The comparison window may be shown on the instrument panel or any mobile device such as the EFB as well.

The display of the comparison window 504 provides real-time feedback to the vehicle crew regarding the status of the automated tasks. Alerts, notifications, and visual cues then may be provided as to the updates as well to maintain high situational awareness and allow the vehicle crew members to promptly intervene when needed.

Process 300 may include "automatically mark task as complete when actual status shows task complete" 334, and this may occur when the task status monitor unit 240 is monitoring the real-time vehicle context data to determine whether a task has been completed. In this case when the task status monitor unit 240 finds that the expected and actual status is the same or sufficiently similar by the operations described above, the task status monitor unit 240 signals to the task status display manager 242 to mark the task as completed on the main checklist as well as the checklist field of the overlay or dedicated checklist support page.

Referring to FIG. 6, process 300 optionally may include "indicate the match to the pilot" 336, where the task status monitor unit 240 provides task complete signals to the task status display manager 242. Here as another example, a display 600 shows a dedicated checklist support page 602 with a checklist field 604 and a comparison window field 606 (or just comparison window). The checklist field 604 is similar or the same as the checklist field 418 as described above and need not be described again here. The checklist field 604 shows at least part of one or more main checklists being used. Here, however, a task complete source indicator 616 for landing gear shows "COM", which indicates the task status system 200 marked the task complete on its own by monitoring the real-time vehicle context data. Also, the flaps source indicator area 618 shows the down arrow to indicate the comparison window 606 is showing a comparison for the flaps.

By yet another alternative approach, a details button 620 may be provided so that when the details button is touched or clicked by the pilot, or when the pilot touches or clicks the comparison window, or other desired area, a details page pops up (not shown) either as an overlay or a dedicated page that shows the details of the basis of the selected task status. This may include showing a list of sensors with corresponding sensor data values, computed parameters, and so forth grouped as a set of features used to determine the actual and expected task statuses so that the pilot does not need to find this data by looking at multiple places around a cockpit or instrument panel when the pilot wants to confirm the basis of the task status. This reduces a significant amount of workload for the pilot or aircrew.

Also, the comparison window 606 is similar to the comparison window 504, shows the results of the comparing and need not be described in detail again. Here, however, a single visual copy 610 of the object 612 is shown to indicate the actual and expected status is the same or equal (or matches) as indicated in the title 608, although two matching or same objects with same positions and/or same parameter values could be shown instead. In this example the object is the flap gauge showing 10 degrees (as emphasized in the frame 614).

By one example implementation, the dedicated checklist support page 602 only shows the checklist field 604 list(s) and the comparison window 606 without showing other avionics page images. By one example, the comparison window 606 is displayed either automatically by the task status system 200 when a difference between the actual and expected status is detected (or established), or when the pilot selects one of the tasks on a main checklist page or on the checklist field 604 of the dedicated checklist support page 602 as indicated by indicator 618 as mentioned above.

It also will be appreciated that the overlays or dedicated checklist support page may be considered a confirmation page. Thus, as mentioned above, once a task progresses to a point where a confirmation is needed from a vehicle operator, whether to confirm a parameter value or merely approve automatic progression of a task, an avionics confirmation page may be automatically displayed or "popped up", and this may be the dedicated checklist support page (FIG. 6), the overlays (FIG. 4), or a corresponding graphics window or screen whether on the same display device or another display device. This may occur whether on the vehicle or a remote location if desired, such as an EFB. The dedicated checklist support page 602 as a confirmation page enables a pilot to confirm the action initiated by viewing the checklist window, and then checking the task complete if not already performed automatically as described above.

It should be appreciated that the process 300 may include any number of additional or alternative operations, and the operations need not be performed in the illustrated order. Also, the operations of process 300 may be performed concurrently, and/or may be incorporated into a more comprehensive procedure or process having additional functionality not described in detail herein. Moreover, one or more of the tasks shown and described in the context of FIGS. 3A-3C can be omitted from a practical implementation of the process 300 as long as the intended overall functionality remains intact.

The subject matter may be described herein in terms of functional and/or logical block, module, or unit components, and with reference to symbolic representations of operations, processing tasks, and functions that may be performed by various computing components or devices. It should be appreciated that the various block components shown in the figures may be realized by any number of hardware components configured to perform the specified functions. For example, an implementation of a system or a component may employ various integrated circuit components, e.g., memory elements, digital signal processing elements, logic elements, look-up tables, or the like, which may perform a variety of functions under the control of one or more microprocessors or other control devices. Furthermore, implementations of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description may refer to elements or units or systems or features being "connected" or "coupled" together. As used herein, unless expressly stated otherwise, "coupled" and "connected" refers to direct or indirect connection (or direct or indirect communication) between element, units, and so forth, and not necessarily mechanical connection or coupling. Thus, although the drawings may depict one example arrangement of elements directly connected to one another, additional intervening elements, devices, features, or components may be present in an implementation of the depicted subject matter. In addition, certain terminology may also be used herein for the purpose of reference only, and thus are not intended to be limiting.

The foregoing detailed description is merely example in nature and is not intended to limit the subject matter of the application and uses thereof. Furthermore, there is no intention to be bound by any theory presented in the preceding background, brief summary, or the detailed description.

While at least one example implementation has been presented in the foregoing detailed description, it should be appreciated that a vast number of variations exist. It should also be appreciated that the example implementation or example implementations are only examples, and are not intended to limit the scope, applicability, or configuration of the subject matter in any way. Rather, the foregoing detailed description will provide those skilled in the art with a convenient road map for implementing an example implementation of the subject matter. It should be understood that various changes may be made in the function and arrangement of elements described in an example implementation without departing from the scope of the subject matter as set forth in the appended claims. Accordingly, details of the example implementations or other limitations described above should not be read into the claims absent a clear intention to the contrary.

## Claims

1. A method, comprising:
receiving, by at least one processor, data indicating a real-time context of a vehicle including indicators of an actual status of one or more tasks to be performed by a vehicle operator listed on one or more checklists of the vehicle;
monitoring, by at least one processor, audio on the vehicle;
determining, by at least one processor, whether the audio includes language that indicates one or more of the tasks on the checklists was performed;
marking, by at least one processor, a task complete on a digital checklist of the one or more tasks when the audio indicates a task was performed;
determining, by at least one processor, an expected status of the one or more tasks**;**
comparing, by at least one processor, the actual status to the expected status of individual tasks; and
displaying a result of the comparing on an image on a display device on the vehicle including one or more visual copies of an object used to indicate a status of the task on the vehicle with a first visual copy showing an actual task status and a second visual copy showing an expected task status.

2. The method of claim 1, wherein the displaying comprises showing a first version of the object in the first visual copy with an actual status value and a second version of the object in the second visual copy with an expected status value.

3. The method of claim 1, wherein the displaying includes displaying at least part of one of the checklists with an indication of which task is associated with the comparing and the result of the comparing.

4. The method of claim 3, wherein the displaying comprises displaying a dedicated checklist support page that only has a field with the at least part of one of the checklists and another field with the result of the comparing.

5. The method of claim 1, wherein the objects are vehicle parameter gauges.

6. The method of claim 1, wherein the objects are vehicle controls set in one of a plurality of available operational mode positions having distinct functions.

7. The method of claim 1, wherein the objects are vehicle components positioned in one of a plurality of available positions.

8. The method of claim 1, wherein the displaying comprises displaying a single object with a single parameter when the actual status of a task is the same as the expected status of the task.

9. The method of claim 1, wherein the displaying comprises showing current and expected labels that indicate whether the result of the comparing is a match or a non-match between the expected status and the actual status of a task.

10. The method of claim 1, wherein the displaying includes displaying at least part of one of the checklists with an indication of which task is marked complete due to an announcement by an operator of the vehicle.

11. The method of claim 1, wherein the displaying includes displaying at least part of one of the checklists with an indication of which task is marked complete due to monitoring of the real-time context of the vehicle.

12. A system, comprising:
memory; and
processor circuitry forming at least one processor communicatively coupled to the memory and being arranged to operate by:
receiving data indicating a real-time context of a vehicle including indicators of an actual status of one or more tasks to be performed by a vehicle operator listed on one or more checklists of the vehicle,
monitoring audio on the vehicle,
determining whether the audio includes language that indicates one or more of the tasks on the checklists was performed,
marking a task complete on a digital checklist of the one or more tasks when the audio indicates a task was performed,
determining an expected status of the one or more tasks comprising using checklist data prestored in the memory**,**
comparing the actual status to the expected status of individual tasks, and
displaying a result of the comparing on an image on a display device on the vehicle including one or more visual copies of an object used to indicate a status of the task on the vehicle with a first visual copy showing an actual task status and a second visual copy showing an expected task status.

13. The system of claim 12, wherein the displaying comprises displaying the first and second digital copies as an overlay on an avionics page on the display device.

14. The system of claim 12, wherein the displaying comprises displaying a dedicated checklist page on a single display showing (1) at least part of a checklist with one or more tasks related to the result of the comparing, and (2) the first and second visual copies.

15. The system of claim 12, wherein the displaying of the result occurs regardless of whether or not an operator of the vehicle opened a display of a checklist.
